# EUROPÄISCHE PATENTANMELDUNG

(11) **EP 1 039 162 A2**
(43) Veröffentlichungstag der Anmeldung: **27.09.2000**
(21) Anmeldenummer: 00103336.4
(22) Anmeldetag: 21.02.2000
(51) Int. Cl.: F16D 3/227

(54) **Axial verschiebbares Gleichlaufdrehgelenk**

(30) Priorität: 20.03.1999 DE 19912730
(71) Anmelder: Volkswagen Aktiengesellschaft, 38436 Wolfsburg (DE)
(72) Erfinder: Schrimpf, Holger, Dipl.-Ing., 38106 Braunschweig (DE)

(57) **Zusammenfassung**

Die Erfindung betrifft ein axial verschiebbares Gleichlaufdrehgelenk (1) mit einem äußeren Gelenkkörper (2) und einem Gelenkinnenteil (3), wobei zwischen dem Gelenkkörper (2) und dem Gelenkinnenteil (3) mehrere Kugeln (4) vorgesehen sind und jede Kugel (4) in einer am Gelenkkörper (2) vorgesehen Bahn (5) geführt und in einem Käfigfenster (6a) eines Käfigs (6) gehalten ist und mit Hilfe der Kugeln (4) ein Drehmoment vom Gelenkkörper (2) auf das Gelenkinnenteil (3) oder vom Gelenkinnenteil (3) auf den Gelenkkörper (2) übertragbar ist, wobei aufgrund eines entsprechend vorhandenen Spieles ein Kontakt zwischen der Außenfläche (6b) des Käfigs (6) mit einer Innenfläche (2a) des Gelenkkörpers (2) und/oder eine Verlagerung der Kugeln (4) in radialer Richtung innerhalb der Käfigfenster (6a) ermöglicht ist.

Die Geräuschentstehung ist dadurch vermieden, daß auf der mit der Außenfläche (6b) des Käfigs (6) in Kontakt bringbaren Innenfläche (2a) des Gelenkkörpers (2) und/oder auf den im wesentlichen radialen Innenseiten (6c) der Käfigfenster (6a) eine Dämpfungsschicht (7) vorgesehen ist.

## Beschreibung

Die Erfindung betrifft ein axial verschiebbares Gleichlaufdrehgelenk mit einem äußeren Gelenkkörper und einem Gelenkinnenteil, wobei zwischen dem Gelenkkörper und dem Gelenkinnenteil mehrere Kugeln vorgesehen sind und jede Kugel in einer am Gelenkkörper vorgesehenen Bahn geführt und in einem Käfigfenster eines Käfigs gehalten ist und mit Hilfe der Kugeln ein Drehmoment vom Gelenkkörper auf das Gelenkinnenteil oder vom Gelenkinnenteil auf den Gelenkkörper übertragbar ist, wobei aufgrund eines entsprechend vorhandenen Spieles ein Kontakt zwischen der Außenfläche des Käfigs mit einer Innenfläche des Gelenkkörpers und/oder eine Verlagerung der Kugeln in radialer Richtung innerhalb der Käfigfenster ermöglicht ist.

Im Stand der Technik sind axial verschiebbare Gleichlaufdrehgelenke bekannt, mit deren Hilfe eine Drehmomentübertragung bspw. von einer ersten Welle auf eine zweite Welle erfolgen kann, wobei das Gleichlaufdrehgelenk eine bestimmte axiale Verschiebbarkeit der Wellen zueinander 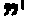 kompensieren" kann. Hierzu weist das Gleichlaufdrehgelenk einen äußeren Gelenkkörper und ein Gelenkinnenteil auf, zwischen denen funktional wirksam entsprechende Kugeln vorgesehen sind und wobei mit Hilfe dieser Kugeln eine Drehmomentübertragung von dem Gelenkkörper auf das Gelenkinnenteil erfolgen kann. Hierzu sind am Gelenkkörper bzw. am Gelenkinnenteil entsprechende Bahnen vorgesehen, wobei die Kugeln mit einem Käfig (Kugelkäfig), d. h. in den entsprechenden Käfigfenstern des Käfigs gehalten werden. Damit eine axiale Verschiebbarkeit im Bereich des Gleichlaufdrehgelenkes gewährleistet ist, weist das Gleichlaufdrehgelenk entsprechend vorhandenes Spiel auf, so daß zum einen ein Kontakt zwischen der Außenfläche des Käfigs mit einer Innenfläche des Gelenkkörpers und zum anderen eine Verlagerung der Kugeln in radialer Richtung innerhalb der Käfigfenster ermöglicht ist.

Die Praxis hat gezeigt, daß beim Einsatz derartiger Gleichlaufdrehgelenke es häufig zu Geräuschproblemen kommt, die allgemein als 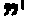 Brummschnarren" bezeichnet werden. Dieses Geräusch läßt auf einen ernsthaften Schaden schließen, das der Kunde beunruhigt zur Kenntnis nimmt, wenn auch die Ursache des Geräusches unkritisch ist.

Das Geräusch entsteht in dem Bereich des Gleichlaufdrehgelenks, dort wo das notwendige Spiel zwischen Käfig und den Kugeln bzw. dem Käfig und dem Gelenkkörper der Aufprall der Kugeln auf die radialen Innenseiten der Käfigfenster bzw. der Aufprall des Käfigs auf entsprechende Innenflächen des Gelenkkörpers stattfindet. Insbesondere bei Erreichen einer bestimmten Beschleunigungsamplitude entsteht ein schnarrendes Geräusch ( 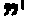 Brummschnarren"), wobei der Käfig in bestimmten Frequenzbereichen auch zum Schwingen angeregt wird. Eine Geräuschbeseitigung, falls überhaupt möglich, läßt hohe Kosten entstehen.

So sind im Stand der Technik Gleichlaufdrehgelenke bekannt (DE-C 38 32 190), bei denen ebenfalls das 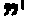 Brummschnarren" auftritt, obwohl bspw. das hier beschriebene Gleichlaufdrehgelenk einen als Kunststoffteil ausgeführten Haltering aufweist, der die Kugeln 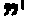 aufnimmt" bzw. federnd abstützt, wenn diese am Ende der entsprechenden Bahnen den Gelenkkörper 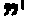 nahezu" verlassen.

Weiterhin sind auf einem abgelegeneren Gebiet des Standes der Technik, nämlich auf dem Gebiet der Kugellager, Kugellager bekannt (DE-A 30 41 355), die bspw. einen aus zwei im wesentlichen ringförmigen Elementen zusammengesetzten Kugelkäfig aufweisen, wobei die Oberfläche des Kugelkäfigs mit einem Überzug aus Kunststoff versehen ist, was dem Zweck dient, die Lebensdauer des Kugellagers zu erhöhen, wenn nämlich insbesondere nicht mehr genug Schmierstoffe vorhanden sind. Die hier aufgebrachte Kunststoffbeschichtung erhöht die Lebensdauer des Kugellagers unter ungünstigen Schmierbedingungen. Allerdings liegt das Gebiet der Kugellager hier weit ab, da einerseits Kugellager eben nicht - wie Gleichlaufdrehgelenke - Drehmomente übertragen müssen und andererseits das bei einem Gleichlaufdrehgelenk existierende benötigte Spiel zwischen einzelnen Elementen nicht aufweisen müssen und hierdurch auch kein entsprechender Aufprall stattfindet.

Da die im Stand der Technik bekannten Gleichlaufdrehgelenke aufgrund des häufigen Auftretens des 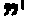 Brummschnarrens" nicht optimal ausgebildet sind, liegt der Erfindung die Aufgabe zugrunde, das eingangs genannte Gleichlaufdrehgelenk, derart auszugestalten und weiterzubilden, daß einer Geräuschentstehung, insbesondere dem 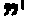 Brummschnarren" im Betrieb entgegengewirkt wird bzw. diese verhindert ist.

Die zuvor aufgezeigte Aufgabe ist nun dadurch gelöst, daß auf der mit der Außenfläche des Käfigs in Kontakt bringbaren Innenfläche des Gelenkkörpers und/oder auf den im wesentlichen radialen Innenseiten der Käfigfenster eine Dämpfungsschicht vorgesehen ist. Durch die Anordnung einer entsprechenden Dämpfungsschicht an den zuvor erwähnten Stellen, nämlich an den Stellen, wo aufgrund des entsprechend vorhandenen Spieles innerhalb des Gleichlaufdrehgelenks ein Aufprall der Kugeln auf die radialen Innenseiten der Käfigfenster bzw. ein Aufprallen des Käfigs, nämlich seiner Außenfläche auf die Innenfläche des Gelenkkörpers nunmehr durch die Dämpfungsschicht gedämpft wird, kann das im Stand der Technik bisher bekannte 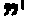 Brummschnarren" auf sehr kostengünstige Art und Weise verringert bzw. vermieden werden. Auch bei höherer Motordrehzahl und geringer Last entstehen keine Geräusche bei einem erfindungsgemäß ausgebildeten Gleichlaufdrehgelenk, so daß auch die Beanstandungen vom Kunden entfallen, da er nunmehr kein unangenehmes Geräusch mehr wahrnehmen kann.

Es gibt nun eine Vielzahl von Möglichkeiten, das erfindungsgemäße Gleichlaufdrehgelenk in vorteilhafter Weise auszugestalten und weiterzubilden. Hierfür darf an dieser Stelle auf die dem Patentanspruch 1 nachgeordneten Patentansprüche verwiesen werden. Im übrigen werden nun mehrere Ausführungsformen der Erfindung anhand einer Zeichnung näher erläutert. In der Zeichnung zeigt
- Fig. 1: ein Gleichlaufdrehgelenk in einer schematischen geschnittenen Darstellung,
- Fig. 2: einen Käfig zur Aufnahme der Kugeln in einer schematischen perspektivischen Darstellung,
- Fig. 3: ein erfindungsgemäßes Gleichlaufdrehgelenk in einer teilweise geschnittenen schematischen Darstellung ohne Kugeln, Gelenkinnenteil und Käfig, mit einer punktförmig ausgebildeten Dämpfungsschicht,
- Fig. 4: das in Fig. 3 dargestellte Gleichlaufdrehgelenk in einer geschnittenen Darstellung von der Seite, jedoch mit Kugeln, Gelenkinnenteil etc.,
- Fig. 5: eine ähnlich Darstellung wie in Fig. 3 mit einer linienförmig ausgebildeten Dämpfungsschicht,
- Fig. 6: in einer schematischen Darstellung einen Käfig mit einer punktförmig ausgebildeten Dämpfungsschicht,
- Fig. 7: ein Käfig mit einer weiteren anderweitig ausgebildeten Dämpfungsschicht und
- Fig. 8: das Zusammenwirken zwischen Gelenkinnenteil, Kugel, Käfig und Gelenkkörper sowie Dämpfungsschicht bei einem entsprechend vorhandenen Spiel in einer schematischen Darstellung teilweise geschnitten von der Seite.

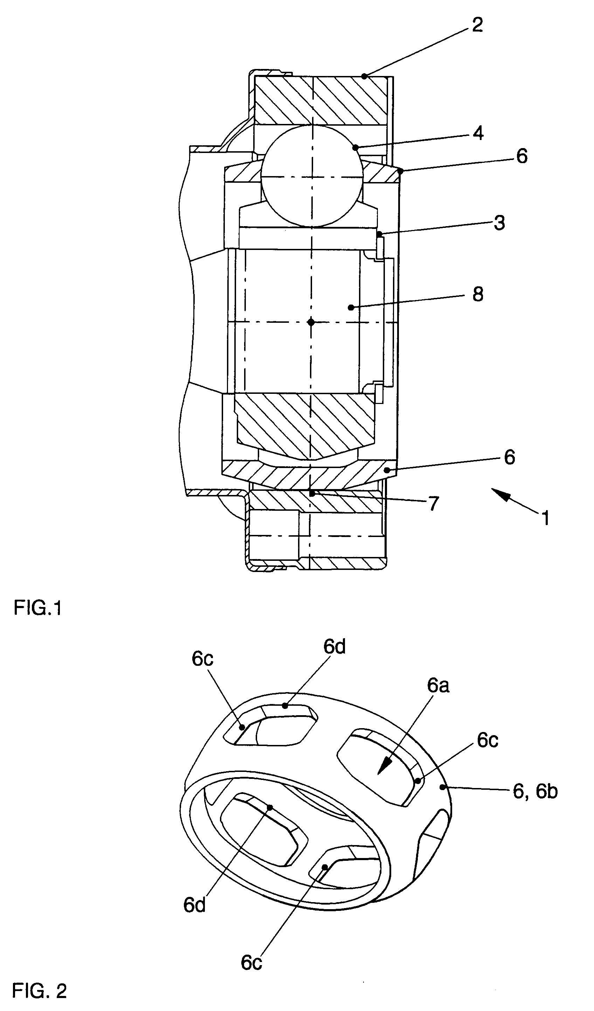

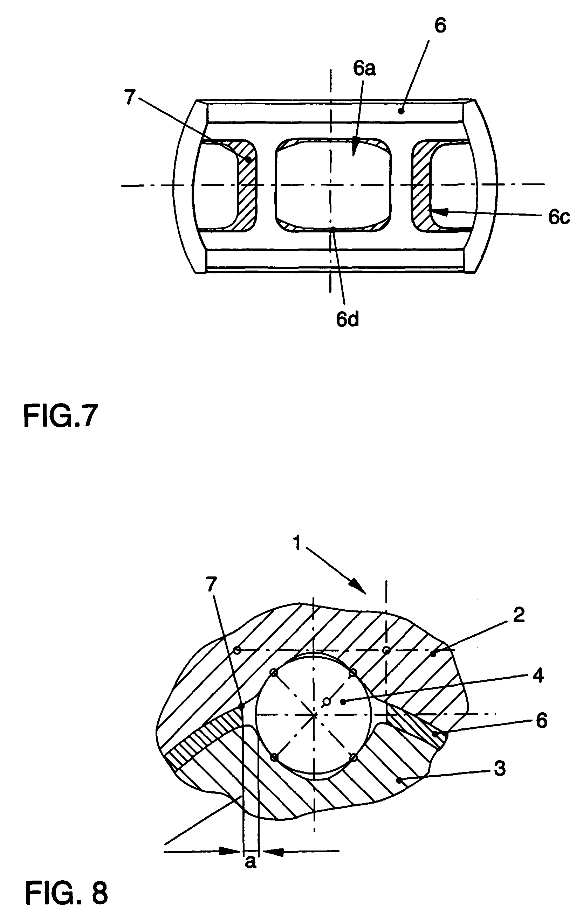

Die Fig. 1 bis 8 zeigen - zumindest teilweise - ein axial verschiebbares Gleichlaufdrehgelenk 1 mit einem äußeren Gelenkkörper 2 und einem Gelenkinnenteil 3. Zwischen dem Gelenkkörper 2 und dem Gelenkinnenteil 3 sind mehrere Kugeln 4 vorgesehen, wobei jede Kugel 4 in einer am Gelenkkörper 2 vorgesehenen Bahn 5 geführt und in einem Käfigfenster 6a eines Käfigs 6 gehalten ist. Mit Hilfe der Kugeln 4 ist ein Drehmoment vom Gelenkkörper 2 auf das Gelenkinnenteil 3 (oder auch umgekehrt) übertragbar, wobei aufgrund eines entsprechend vorhandenen Spieles, das aus Fig. 8 näher zu erkennen ist, ein Kontakt zwischen der Außenfläche 6b des Käfigs 6 mit einer Innenfläche 2a des Gelenkkörpers 2 und/oder eine Verlagerung der Kugeln 4 in radialer Richtung innerhalb der Käfigfenster 6a ermöglicht ist.

Die eingangs beschriebenen Nachteile werden nun dadurch eliminiert, d. h. der Aufprall der Kugeln 4 innerhalb der Käfigfenster 6a bzw. der Aufprall des Käfigs 6 auf den Gelenkkörper 2 und die dadurch hervorgerufene Geräuschentstehung wird nun dadurch vermieden, daß auf der mit der Außenfläche 6b des Käfigs 6 in Kontakt bringbaren Innenfläche 2a des Gelenkkörpers 2 und/oder auf den im wesentlichen radialen Innenseiten 6c der Käfigfenster 6a eine Dämpfungsschicht 7 vorgesehen ist. Durch die Dämpfungsschicht 7 kann der Aufprall der Kugeln 4 auf die radialen Innenseiten 6c bzw. der Aufprall der Außenfläche 6b des Käfigs 6 auf die Innenfläche 2a des Gelenkkörpers 2 entsprechend gedämpft und damit eine Geräuschentstehung vermieden bzw. das entsprechende Restgeräusch verringert werden.

Fig. 1 zeigt nun, daß das Gelenkinnenteil 3 hier als Nabe ausgeführt ist, wobei die Nabe hier entsprechende im wesentlichen zu den Bahnen 5 des Gelenkkörpers 2 korrespondierende nicht näher bezeichnete Ausnehmungen zur Führung der Kugeln 4 aufweist. Das Gelenkinnenteil 3 ist mit einer ersten Welle 8 verbunden, wobei der Gelenkkörper 2 ebenfalls mit einem weiteren drehbaren Element, bspw. über eine Hülse mit einer zweiten, hier nicht dargestellten Welle verbindbar ist.

Fig. 2 zeigt in einer perspektivischen schematischen Darstellung den Käfig 6, ohne eine Dämpfungsschicht 7. Deutlich zu erkennen sind hier die Käfigfenster 6a, die Umfangs- bzw. Außenfläche 6b sowie die radialen Innenseiten 6c der Käfigfenster 6a, die im wesentlichen in axialer Längsrichtung des Käfigs 6 verlaufen. Die anderen Innenseiten 6d verlaufen im wesentlichen in Querrichtung des Käfigs 6.

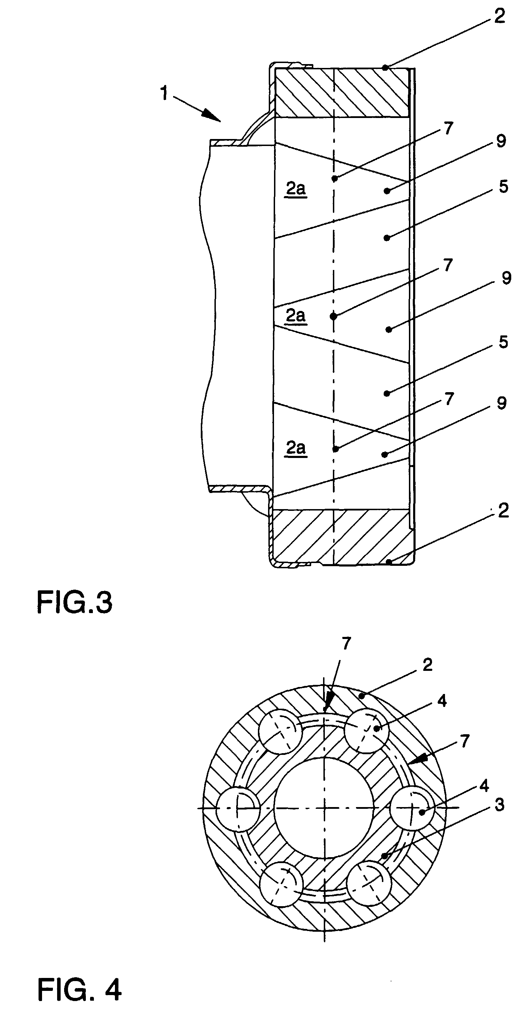

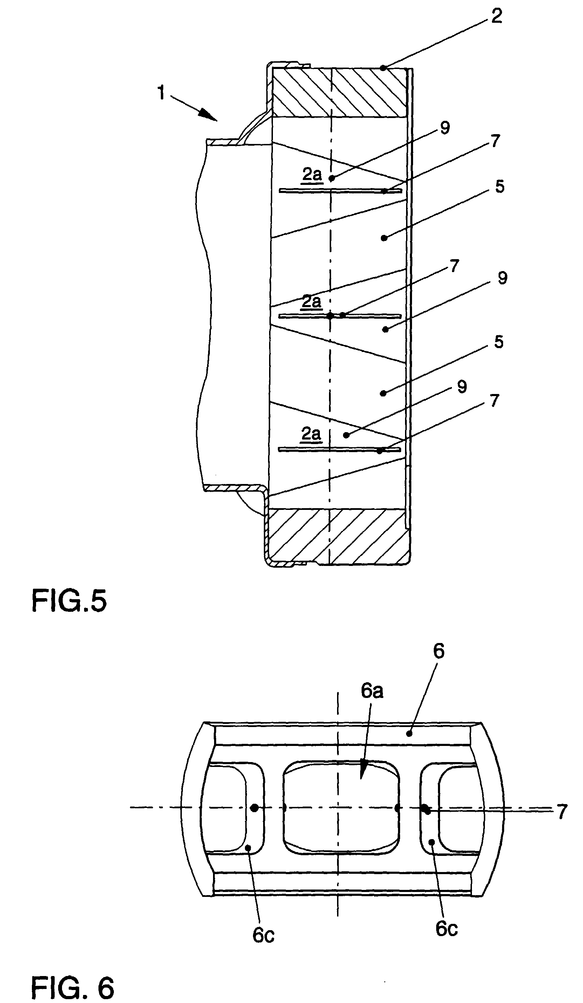

Wie aus der schematischen Darstellung in Fig. 3 zu erkennen ist, verlaufen die Bahnen 5 des Gelenkkörpers 2 im wesentlichen schräg, wobei zueinander benachbarte Bahnen 5 jeweils eine entgegengesetzt zueinander schräg verlaufende Richtung aufweisen. Dies hat zur Folge, daß bei einer entsprechenden axialen Verschiebung, benachbarte Kugeln 4, d. h. der relative Abstand dieser Kugeln 4 sich entweder verringert oder vergrößert. Wie die Fig. 3 und auch die Fig. 5 erkennen lassen, sind die Bahnen 5 durch im wesentlichen dreiecksförmige nach innen ragende Vorsprünge 9 des Gelenkkörpers 2 begrenzt. Die nach innen gerichteten Außenflächen der Vorsprünge 9 sind - als Innenfläche 2a - des Gelenkkörpers 2 mit der Außenfläche 6b des Käfigs 6 in Kontakt bringbar.

Wie Fig. 3 und die Fig. 5 erkennen lassen, ist auf der Außenfläche (= Innenfläche 2a des Gelenkkörpers 2) der Vorsprünge 9 eine Dämpfungsschicht 7 vorgesehen. Die in Fig. 3 dargestellte Dämpfungsschicht 7 ist im wesentlichen punktförmig ausgebildet, wobei die in Fig. 5 dargestellte Dämpfungsschicht 7 im wesentlichen linienförmig ausgebildet ist. Eine linienförmige Ausbildung der Dämpfungsschicht 7 hat insbesondere den Vorteil, daß auch bei einer entsprechend großen axialen Verschiebung noch eine Dämpfung des Aufpralles der Außenfläche 6b des Käfigs 6 auf die Innenfläche 2a gewährleistet ist.

Die Fig. 6 und 7 zeigen nun die Anordnung einer Dämpfungsschicht 7 innerhalb der Käfigfenster 6a des Käfigs 6 und zwar nur die Anordnung von einer Dämpfungsschicht 7 auf den entsprechenden radialen Innenseiten 6c des Käfigfensters 6a, also an den Seiten, zu denen die Kugeln 4 noch ein entsprechendes Spiel innerhalb des Käfigfensters 6a aufweisen. Fig. 6 zeigt eine Dämpfungsschicht 7, die auf der radialen Innenseite 6c der Kugelfenster 6a punktförmig ausgebildet ist, wobei Fig. 7 im wesentlichen eine Dämpfungsschicht 7 zeigt, von der die radialen Innenseiten 6c der Kugelfenster 6a im wesentlichen vollständig bedeckt sind.

Die Dämpfungsschicht 7 wird vorzugsweise als Gummischicht oder auch als Teflonschicht ausgeführt. Mit Hilfe der Dämpfungsschicht 7 kann der entsprechende Aufprall der Kugeln 4 innerhalb der Käfigfenster 6a bzw. der Aufprall des Käfigs 6 auf den Gelenkkörper 2 gedämpft und damit das entsprechende Geräusch vermieden bzw. verringert werden.

Das innerhalb eines Gleichlaufdrehgelenkes 1 vorhandene Spiel zeigt in näherer Darstellung die Fig. 8, wobei hier durch den Abstand a, der zumindest das 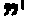 einseitige Spiel" der Kugeln 4 innerhalb des Käfigfensters 6a bezeichnet, auch hier zu erkennen ist, daß zwar eine punktförmige Ausführung der Beschichtung 7 möglich, aber eine vollständige Überdeckung der radialen Innenseiten 6c des Käfigfensters 6a mit einer entsprechenden Dämpfungsschicht 7 von Vorteil ist, um die Entstehung des 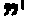 Brummschnarrens" zu vermeiden.

## Patentansprüche

1. Axial verschiebbares Gleichlaufdrehgelenk (1) mit einem äußeren Gelenkkörper (2) und einem Gelenkinnenteil (3), wobei zwischen dem Gelenkkörper (2) und dem Gelenkinnenteil (3) mehrere Kugeln (4) vorgesehen sind und jede Kugel (4) in einer am Gelenkkörper (2) vorgesehen Bahn (5) geführt und in einem Käfigfenster (6a) eines Käfigs (6) gehalten ist und mit Hilfe der Kugeln (4) ein Drehmoment vom Gelenkkörper (2) auf das Gelenkinnenteil (3) oder vom Gelenkinnenteil (3) auf den Gelenkkörper (2) übertragbar ist, wobei aufgrund eines entsprechend vorhandenen Spieles ein Kontakt zwischen der Außenfläche (6b) des Käfigs (6) mit einer Innenfläche (2a) des Gelenkkörpers (2) und/oder eine Verlagerung der Kugeln (4) in radialer Richtung innerhalb der Käfigfenster (6a) ermöglicht ist, **dadurch gekennzeichnet**, daß auf der mit der Außenfläche (6b) des Käfigs (6) in Kontakt bringbaren Innenfläche (2a) des Gelenkkörpers (2) und/oder auf den im wesentlichen radialen Innenseiten (6c) der Käfigfenster (6a) eine Dämpfungsschicht (7) vorgesehen ist.

2. Gleichlaufdrehgelenk nach Anspruch 1, **dadurch gekennzeichnet**, daß das Gelenkinnenteil (3) als Nabe ausgeführt ist und die Nabe entsprechende im wesentlichen zu den Bahnen (5) des Gelenkkörpers (2) korrespondierende Ausnehmungen zur Führung der Kugeln (4) aufweist.

3. Gleichlaufdrehgelenk nach Anspruch 1 oder 2, **dadurch gekennzeichnet**, daß das Gelenkinnenteil (3) mit einer ersten Welle (8) und der Gelenkkörper (2) mit einem weiteren drehbaren Element, insbesondere über bspw. eine Hülse mit einer zweiten Welle verbindbar ist.

4. Gleichlaufdrehgelenk nach einem der vorstehenden Ansprüche, **dadurch gekennzeichnet**, daß die Bahnen (5) des Gelenkkörpers (2) im wesentlichen schräg verlaufen und zueinander benachbarte Bahnen (5) jeweils eine entgegengesetzt zueinander schräg verlaufende Richtung aufweisen.

5. Gleichlaufdrehgelenk nach einem der vorstehenden Ansprüche, **dadurch gekennzeichnet**, daß die Bahnen (5) durch im wesentlichen dreiecksförmige nach innen ragende Vorsprünge (9) des Gelenkkörpers (2) begrenzt sind.

6. Gleichlaufdrehgelenk nach einem der vorstehenden Ansprüche, **dadurch gekennzeichnet**, daß die nach innen gerichteten Außenflächen der Vorsprünge (9) als Innenfläche (2a) des Gelenkkörpers (2) mit der Außenfläche (6b) des Käfigs (6) in Kontakt bringbar sind.

7. Gleichlaufdrehgelenk nach einem der vorstehenden Ansprüche, **dadurch gekennzeichnet**, daß auf den Außenflächen der Vorsprünge (9) bzw. der Innenfläche (2a) des Gelenkkörpers (2) eine Dämpfungsschicht (7) vorgesehen ist.

8. Gleichlaufdrehgelenk nach einem der vorstehenden Ansprüche, **dadurch gekennzeichnet**, daß die Dämpfungsschicht (7) punktförmig ausgebildet ist.

9. Gleichlaufdrehgelenk nach einem der vorstehenden Ansprüche, **dadurch gekennzeichnet**, daß die Dämpfungsschicht (7) linienförmig ausgebildet ist.

10. Gleichlaufdrehgelenk nach einem der vorstehenden Ansprüche, **dadurch gekennzeichnet**, daß die auf den radialen Innenseiten (6c) der Käfigfenster (6a) vorgesehene Dämpfungsschicht (7) punktförmig ausgebildet ist.

11. Gleichlaufdrehgelenk nach einem der vorstehenden Ansprüche, **dadurch gekennzeichnet**, daß die auf den radialen Innenseiten (6c) der Käfigfenster (6a) vorgesehene Dämpfungsschicht (7) linienförmig ausgebildet ist.

12. Gleichlaufdrehgelenk nach einem der vorstehenden Ansprüche, **dadurch gekennzeichnet**, daß die radialen Innenseiten (6c) der Käfigfenster (6a) im wesentlichen vollständig von einer Dämpfungsschicht (7) bedeckt sind.

13. Gleichlaufdrehgelenk nach einem der vorstehenden Ansprüche, **dadurch gekennzeichnet**, daß die Dämpfungsschicht (7) als Gummischicht ausgeführt ist.

14. Gleichlaufdrehgelenk nach einem der vorstehenden Ansprüche, **dadurch gekennzeichnet**, daß die Dämpfungsschicht (7) als Teflonschicht ausgeführt ist.
